# EUROPEAN PATENT APPLICATION

(11) **EP 1 707 282 A1**
(43) Date of publication of application: **04.10.2006**
(21) Application number: 05704090.9
(22) Date of filing: 19.01.2005
(51) Int. Cl.: B21B 45/00, C21D 1/42

(54) **HEAT TREATING DEVICE FOR STEEL PLATE AND STEEL PLATE MANUFACTURING LINE HAVING THE HEAT TREATING DEVICE**

(30) Priority: 21.01.2004 JP 2004013423; 18.03.2004 JP 2004077338; 18.03.2004 JP 2004077337
(71) Applicant: JFE Steel Corporation, Tokyo, 100-0011 (JP)
(72) Inventor: HINO, Yoshimichi, c/o Intellectual Property Dept., Tokyo 100-0011 (JP); SUGIOKA, Masatoshi c/o Intellectual Property Dept, Tokyo 100-0011 (JP); NAKANO, Kiyoshi, c/o Intellectual Property Dept., Tokyo 100-0011 (JP); TAKENAMI, Ikuo, c/o Intellectual Property Dept., Tokyo 100-0011 (JP); TAKENOUCHI, Eiji, c/o Intellectual Property Dept., Tokyo 100-0011 (JP); MATSUOKA, Toshio, c/o Intellectual Property Dept., Tokyo 100-0011 (JP)
(74) Representative: Grünecker, Kinkeldey, Stockmair & Schwanhäusser Anwaltssozietät
(86) International application number: PCT/JP2005/000946
(87) International publication number: WO 2005/070576

(57) **Abstract**

The heat-treatment apparatus for steel plate has a plurality of transfer rolls for transferring steel plate in the horizontal direction and at least one induction-heating unit for heating the steel plate. The induction-heating unit is positioned between specified adjacent transfer rolls. At least an induction-heating unit located at the most upstream side among the induction-heating units is provided with at least one pressing roll at outlet thereof to press the steel plate from above. At least the pressing roll located at the most upstream side among the pressing rolls is positioned above and facing the transfer roll located at outlet of the induction-heating unit. Owing to the heat-treatment apparatus for the steel plate, desired heat treatment can be given to the steel plate even with the induction-heating unit without adversely affecting the travel of the steel plate.

## Description

### TECHNICAL FIELD

The present invention relates to a heat-treatment apparatus for steel plate after hot-rolling thereof, specifically a heat-treatment apparatus using an induction-heating unit, and relates to a manufacturing line for steel plate, provided with the heat-treatment apparatus.

### BACKGROUND ART

Steel plates after hot-rolling thereof are often subjected to rapid cooling by quenching or accelerated cooling, followed by tempering to increase their strength and the toughness. Although the quenching and the accelerated cooling are conducted on the on-line basis in recent years, the tempering is still given on the off-line basis using a batch type heating furnace. Therefore, the tempering takes a long time, which significantly deteriorates the productivity of steel plates. Responding to the situation, there are proposed several methods of tempering using an induction-heating unit which allows rapid heating within a shot time.

For example, JP-A-48-25239, (the term "JP-A" referred to herein signifies the "Unexamined Japanese Patent Publication") , discloses a method of uniform heat-treatment in the width direction of steel plate on continuous heat treatment of the steel plate. According to the disclosure, a plurality of induction-heating units is arranged in row, and each edge part of the steel plate is cooled by water before charging the steel plate into the last induction-heating unit.

Alternatively, JP-A-48-252237 discloses a method of uniformly heating a metallic material. According to the disclosure, a heating device is positioned at outlet of the induction-heating unit at the time of entering the front end of the metallic material into the induction-heating unit, and is positioned at inlet of the induction-heating unit at the time of entering the rear end of the metallic material thereinto, thereby heating the front end and the rear end of the metallic material, respectively.

On the other hand, JP-A-2003-13133 discloses a heat-treatment method for steel plate after hot-rolling and accelerated cooling using an induction-heating unit on a single line.

Rapid cooling of steel plate using an induction-heating unit, however, is difficult to conduct the uniform heat treatment over the whole width and the whole length of the steel plate, and a camber appears on the steel plate. Particularly a wide steel plate likely generates large camber. Thus, when a transfer roll or a plurality of induction-heating units is adopted, the steel plate collides against the succeeding induction-heating unit to significantly hinder the travel of steel plate, which fails to achieve the desired heat treatment.

To this point, JP-A-2003-13133 provides a method to correct the camber on steel plate after the heat treatment by locating a hot leveler at downstream side of the induction-heating unit. Since, however, the hot leveler is a large unit, the hot leveler cannot be positioned close to the induction-heating unit. In addition, if a plurality of induction-heating units is arranged, the hot leveler cannot be positioned between adjacent induction-heating units. Consequently, hot leveler cannot prevent the above-described collision of the steel plate against the transfer roll and the induction-heating unit.

### DISCLOSURE OF THE INVENTION

An object of the present invention is to provide a heat-treatment apparatus for steel plate, which conducts desired heat treatment even with an induction-heating unit, without adversely affecting the travel of steel plate, and to provide a steel plate manufacturing line provided with the induction-heating unit.

The object is achieved by a heat-treatment apparatus for steel plate, which apparatus has a plurality of transfer rolls for transferring steel plate in the horizontal direction and at least one induction-heating unit for heating the steel plate. The induction-heating unit is positioned between specified adjacent transfer rolls. At least the induction-heating unit located at the most upstream side among the induction-heating units is provided with at least one pressing roll at outlet thereof to press the steel plate from above. At least the pressing roll located at the most upstream side among the pressing rolls is positioned above and facing the transfer roll located at outlet of the induction-heating unit.

When the steel plate is manufactured by a single manufacturing line which has a hot-rolling mill, an accelerated cooling unit, and the heat-treatment apparatus for the steel plate according to the present invention, the steel plate is stably manufactured at higher productivity.

### BRIEF DESCRIPTION OF THE DRAWINGS

Figure 1A through Fig. 1G illustrate the arrangement of pressing rolls.
Figure 2 defines the camber height h of steel plate.
Figure 3 shows the relation between the pressing roll arrangement condition and the camber height h of steel plate, for the respective Fig. 1A through Fig. 1G.
Figure 4 illustrates an example of connection of the pressing roll with the transfer roll by conductive wire.
Figure 5 illustrates an example of the manufacturing line according to the present invention.
Figure 6 illustrates another example of the manufacturing line according to the present invention.

### EMBODIMENTS OF THE INVENTION

The inventors of the present invention applied heat treatment to a steel plate having 40 mm in thickness and 2000 mm in width, using a solenoid type induction-heating unit located between transfer rolls. The camber appeared at the front end part of the steel plate after heat treatment was investigated as follows.

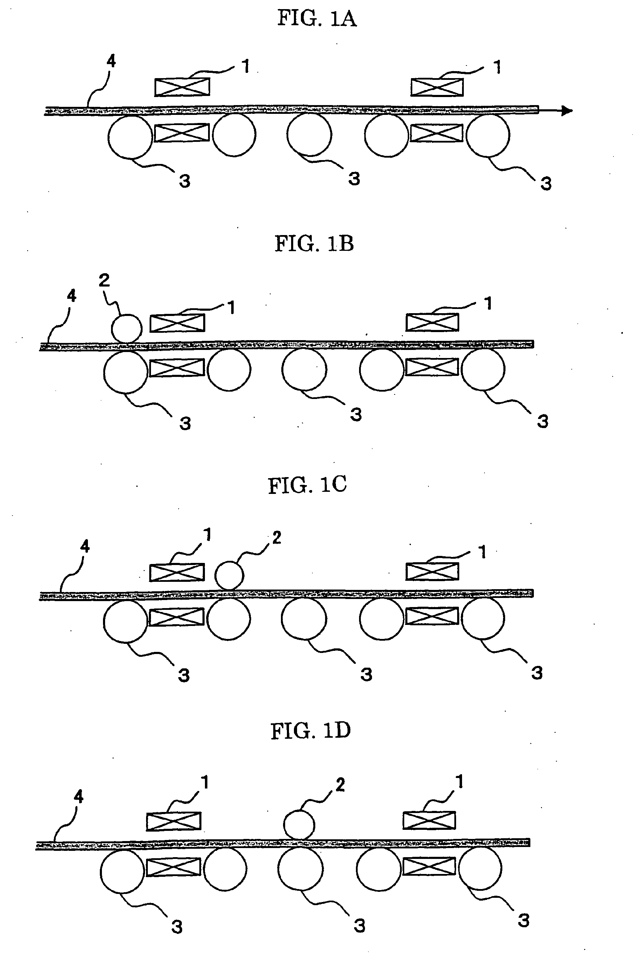

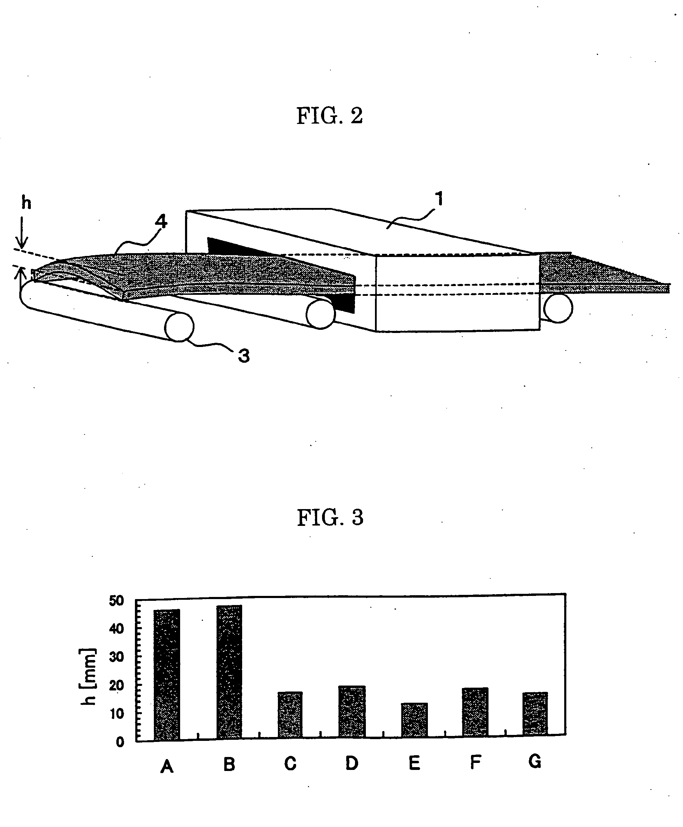

As illustrated in Fig. 1A through Fig. 1G, a pressing roll 2 was located above and facing a transfer roll 3 which was positioned at inlet or outlet of an induction-heating unit 1, thereby pressing a steel plate 4 from above thereof against the transfer roll 3. After the steel plate 4 was heated to a 60 ° C increase in the temperature of the surface thereof, the steel plate 4 was pressed by a pressing roll 2 at a pressing force of 80000 N. The resulting camber height h at the front end part of the steel plate 4 at outlet of the induction-heating unit 1 was determined. The camber height h is defined as, as illustrated in Fig. 2, the height measured from the surface of the steel plate 4 under an assumption that the camber does not reach the maximum point of the cambered steel plate 4.

Figure 3 shows the relation between the pressing roll arrangement condition and the camber height h of steel plate, for the respective Fig. 1A through Fig. 1G.

For the cases of C, D, E, F, and G, where the pressing roll 2 is positioned above and facing the transfer roll 3 which is positioned at outlet of the induction-heating unit 1, the camber height can be suppressed to 20 mm or less, thereby preventing the collision of the steel plate 4 against the transfer roll 3 and the induction-heating unit 1. In addition, since the camber of the steel plate 4 is suppressed, the steel plate 4 can be more uniformly heated in the induction-heating unit 1.

Regarding the pressing roll 2, camber of the steel plate 4 can be suppressed in any of the arrangements of: above the first transfer roll 3 counted from the induction-heating unit 1, as in the cases of C and E; and above the second transfer roll 3 counted from the induction-heating unit 1, as in the case of D. In these cases, to prevent the collision of the front end of the steel plate 4 against the pressing roll 2 or to prevent the overriding the front end thereof onto the pressing roll 2, a guide roll or the like may be located between the outlet of the induction-heating unit 1 and the pressing roll 2 for guiding the front end of the steel plate 4 to the pressing roll 2. Similar effect as above can be attained by positioning the pressing toll 2 above the third or succeeding transfer roll 3.

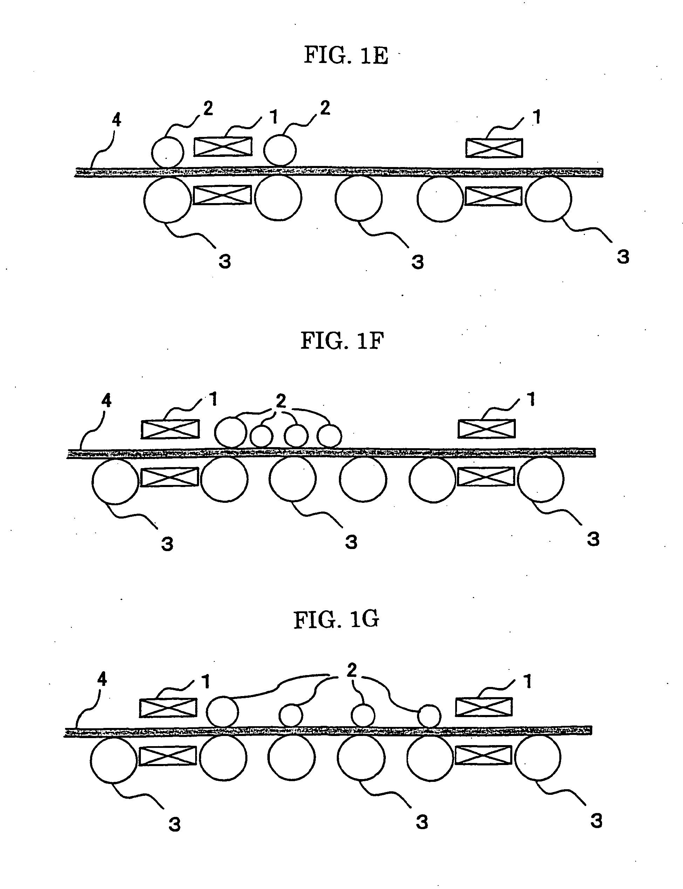

If a plurality of induction-heating units is arranged, and if the distance between the induction-heating units is increased, a plurality of pressing rolls 2 can be arranged above the respective transfer rolls 3 between the induction-heating units 1, as illustrated in Fig. 1F and Fig. 1G.

As illustrated in Fig. 1F, the pressing roll 2 at the most upstream side is not necessarily positioned directly above a transfer roll 3, and the arrangement may be the one that the pressing roll 2 and the transfer roll 3 apply the pressing force to the steel plate 4.

As illustrated in Fig. 1E, when a pressing roll 2 is located also at inlet of the induction-heating unit 1, the arrangement is more effective for the case that the steel plate 4 cambers upward at inlet of the induction-heating unit 1, as illustrated in Fig. 2.

On the other hand, for the cases of A and B, where the pressing roll 2 is not positioned above the transfer roll 3 at outlet of the induction-heating unit 1, the camber height exceeds 40 mm, which leads to very high possibility of colliding the steel plate 4 against the transfer roll 3 and the downstream induction-heating unit 1.

When a plurality of induction-heating units is adopted, camber of steel plate can be suppressed if the pressing roll is located at outlet of at least the most upstream induction-heating unit because the most upstream induction-heating unit likely induces large camber on the steel plate caused by the large magnitude of temperature rise on heating the steel plate. Also the induction-heating units other than the most upstream induction-heating unit may heat the steel plate at a largemagnitude of temperature rise, thus the pressing roll may be located also at outlet of these induction-heating units.

The pressing force of the pressing roll 2 is a fixed value in the above investigation because the width of the steel plate is a fixed value. The pressing force, however, has to be changed depending on the plate width. Smaller plate width needs larger pressing force. For example, a plate having a width of 1500 mm or less needs a pressing force of 100000 N or more, and a plate having a width of about 2000 mm needs a pressing force of 60000 N or more, while a plate having a width of 3000 mm or more needs a pressing force of only about 20000 N.

Similar result is attained by a transverse type induction-heating unit.

The pressing roll may be the one allowing itself to freely rotate around the axis thereof. Since, however, the electromagnetic force generated from the induction-heating unit may vary the transfer speed of the steel plate, the pressing roll is preferably a drive roll to suppress the variations of the speed.

If a steel plate with a large camber passes above a pressing roll, the pressing roll fails to press the steel plate. Accordingly, the diameter of the pressing roll is preferably specified to larger than half the vertical distance of the opening of the induction-heating unit.

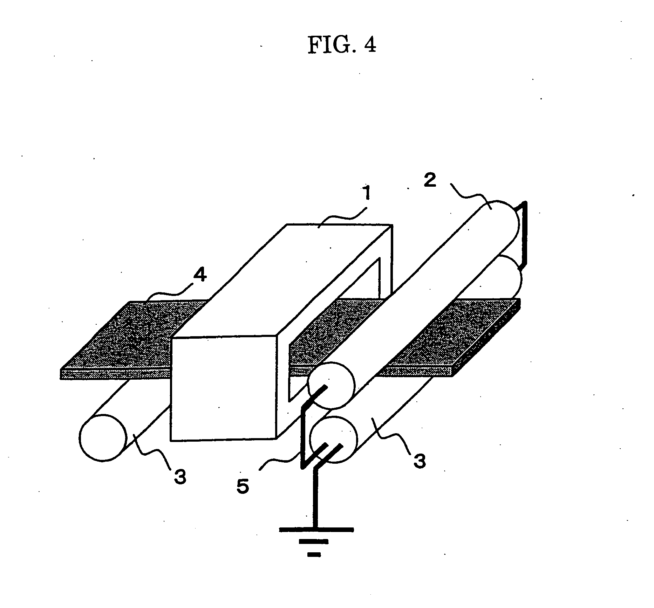

When a traveling steel plate is heated by an induction-heating unit, spark may be generated between the steel plate and the pressing roll or the transfer roll, thereby damaging the edges of the steel plate, or thereby generating spark mark on the roll surface. The defect occurs from the phenomenon that the magnetic flux leaked from the induction-heating unit induces an induction current in a closed circuit formed by the steel plate and the pressing roll or the transfer roll, and once a gap appears between the steel plate and the pressing roll or the transfer roll caused by vibration or camber, the induction current generates spark. To prevent the spark generation, it is effective to increase the electric resistance of the pressing roll or the transfer roll larger than the electric resistance of the steel plate, or to connect the pressing roll 2 with the transfer roll 3 by a conductive wire, thus establishing a closed circuit, as illustrated in Fig. 4.

If the steel plate is an ordinary low carbon steel, electric resistance of the roll can be increased to larger than electric resistance of the steel plate if only the pressing roll or the transfer roll adopts a roll made of, at least the surface thereof, a high alloy steel such as stainless steel.

If the manufacturing line of steel plate adopts the one which arranges a hot-rolling mill, an accelerated cooling unit, and the above-described heat-treatment apparatus for steel plate according to the present invention, in a single line, the steel plate can be stably manufactured at higher productivity.

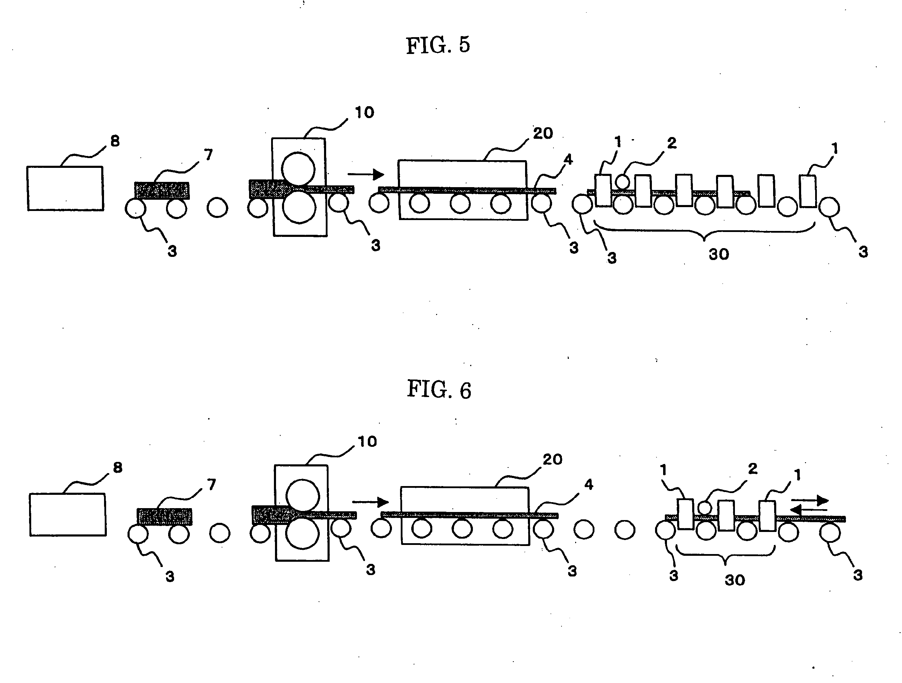

Figure 5 illustrates an example of the manufacturing line according to the present invention.

A slab 7 which is heated in a heating furnace 8 is rolled by a hot-rolling mill 10 to form a steel plate 4. After hot rolling, the steel plate 4 is rapidly cooled by an accelerated cooling unit 20, and then is treated by a heat-treatment apparatus 30 to attain desired characteristics.

The heat-treatment apparatus 30 is structured by six induction-heating units 1. At outlet of the most upstream induction-heating unit 1, a single pressing roll2 is located directly above and facing a transfer roll 3.

Since the steel plate 4 which was subjected to heat treatment by the induction-heating unit 1 is pressed by the pressing roll 2 by a pressing force corresponding to the width of the steel plate 4, the steel plate 4 does not significantly camber, and is allowed to undergo the heat treatment in a downstream induction-heating unit 1 without problem.

Since the heat-treatment apparatus 30 has six induction-heating units, desired heat treatment can be conducted in a single pass.

Figure 6 illustrates another example of the manufacturing line according to the present invention.

Although the manufacturing line has the same conformation as that in Fig. 5, the number of the induction-heating unit 1 in the heat-treatment apparatus 30 is three. Similar to Fig. 5, a single pressing roll 2 is located directly above and facing a transfer roll 3 at outlet of the most upstream induction-heating unit 1.

Since the heat-treatment apparatus 30 has only three induction-heating units 1, the heat treatment is preferably done by reverse-pass. With the reverse-pass, the pressing roll 2 is not necessarily adopted other than in the first pass. In that case, the pressing force may be set to zero.

In the manufacturing lines of Fig. 5 and Fig. 6, steel plate having higher flatness can be manufactured by locating a hot leveler between the accelerated cooling unit 20 and the heat-treatment apparatus 30, or at downstream side of the heat-treatment apparatus 30.

### Examples

With the manufacturing lines of Fig. 5 and Fig. 6, steel plates having 12 to 40 mm in thickness and 1500 to 4000 mm in width, as listed in Table 1, were prepared by a hot-rolling mill. The steel plates were rapidly cooled to near room temperature using a heating and cooling unit. The cooled steel plates were heated to 300°C by an induction-heating unit at the most upstream side in the heat-treatment apparatus. By varying the pressing force of the pressing roll located above a transfer roll positioned at outlet of the most upstream induction-heating unit, as shown in Table 1, the occurrence/not-occurrence of collision of the steel plate against the transfer roll or the induction-heating unit in succeeding travel route was observed. Separately the manufacturing line of Fig. 6 was adopted to investigate the case of three passes of steel plate through the heat-treatment apparatus. In that case, the pressing toll was applied in the first pass.

The applied induction-heating unit was a solenoid type operating at 1500 Hz of frequency, having the opening of coil of 200mminheight, 5000 mm in width, and 2000 mm in length, and generating about 20 MW of maximum output.

The results are given in Table 1.

Examples of the present invention, which used a pressing roll to press the steel plate at an appropriate pressing force depending on the plate width showed no collision against the transfer roll and the induction-heating unit.

For the cases of applying the manufacturing line of Fig. 6, and applying the heat treatment by reverse pass, the adoption of the pressing roll in the first pass avoided the collision.

To the contrary, in Comparative Examples which did not apply pressing roll, or which pressed the steel plate at a small pressing force even when a pressing roll was applied, collision against the transfer roll and the induction-heating unit occurred.

**Table 1**

| Test No. | Manufacturing line | Steel plate | | Presence/ Absence of pressing roll | Pressing force(N) | Occurrence/ Not-occurrence of collision | Remark |
|---|---|---|---|---|---|---|---|
| | | Thickness (mm) | Width (mm) | | | | |
| 1 | Fig. 5 | 40 | 2000 | Presence | 78400 | Not occurred | Example |
| 2 | Fig. 5 | 40 | 1500 | Presence | 117600 | Not occurred | Example |
| 3 | Fig. 5 | 12 | 4000 | Presence | 19600 | Not occurred | Example |
| 4 | Fig. 6 | 40 | 2000 | Presence (Applied in the first pass) | 78400 | Not occurred | Example |
| 5 | Fig.5 | 40 | 2000 | Absence | - | Occurred (against induction-heating unit) | Comparative Example |
| 6 | Fig. 5 | 40 | 2000 | Presence | 0 | Occurred (against transfer roll) | Comparative Example |
| 7 | Fig. 5 | 40 | 2000 | Presence | 39200 | Occurred (against induction-heating unit) | Comparative Example |
| 8 | Fig. 5 | 40 | 1500 | Presence | 98000 | Occurred (against transfer roll) | Comparative Example |

## Claims

1. A heat-treatment apparatus for steel plate, comprising a plurality of transfer rolls for transferring steel plate in the horizontal direction and at least one induction-heating unit for heating the steel plate: the induction-heating unit being positioned between specified adjacent transfer rolls; at least an induction-heating unit, located at the most upstream side among the induction-heating units, being provided with at least one pressing roll at outlet thereof to press the steel plate from above; at least the pressing roll located at the most upstream side among the pressing rolls being positioned above and facing the transfer roll located at outlet of the induction-heating unit.

2. The heat-treatment apparatus according to claim 1, comprising at least one pressing roll to press the steel plate from above at inlet of the induction-heating unit.

3. The heat-treatment apparatus according to claim 1, wherein the pressing roll is a drive roll.

4. The heat-treatment apparatus according to claim 2, wherein the pressing roll is a drive roll.

5. The heat-treatment apparatus according to claim 1, wherein the roll has a diameter larger than half the vertical distance of an opening of the induction-heating unit.

6. The heat-treatment apparatus according to claim 4, wherein the roll has a diameter larger than half the vertical distance of an opening of the induction-heating unit.

7. The heat-treatment apparatus according to claim 1, wherein the pressing roll has electric resistance larger than that of the steel plate.

8. The heat-treatment apparatus according to claim 6, wherein the pressing roll has electric resistance larger than that of the steel plate.

9. The heat-treatment apparatus according to claim 1, wherein the transfer roll has electric resistance larger than that of the steel plate.

10. The heat-treatment apparatus according to claim 8, wherein the transfer roll has electric resistance larger than that of the steel plate.

11. The heat-treatment apparatus according to claim 1, wherein the transfer roll and the pressing roll are connected by a conductive wire with each other, thereby forming a closed circuit.

12. The heat-treatment apparatus according to claim 10, wherein the transfer roll and the pressing roll are connected by a conductive wire with each other, thereby forming a closed circuit.

13. A manufacturing line of steel plate, comprising a hot-rolling mill, an accelerated cooling unit, and the heat-treatment apparatus according to any of claims 1 to 12, on a single line.

14. The manufacturing line of steel plate according to claim 13, comprising a hot leveler positioned between the accelerated cooling unit and the heat-treatment apparatus.

15. The manufacturing line of steel plate according to claim 13, comprising a hot leveler positioned at downstream side of the heat-treatment apparatus.

16. The manufacturing line of steel plate according to claim 14, comprising a hot leveler positioned at downstream side of the heat-treatment apparatus.
